# EUROPEAN PATENT APPLICATION

(11) **EP 0 997 069 A1**
(43) Date of publication of application: **03.05.2000**
(21) Application number: 98830660.1
(22) Date of filing: 30.10.1998
(51) Int. Cl.: A21C 9/06, A21C 15/00

(54) **Machine for injecting a filling into food products**

(71) Applicant: Comas S.p.a., 36030 Pievebelvicino (Vicenza) (IT)
(72) Inventor: Visona', Renato, 36015 Schio (Vicenza) (IT)
(74) Representative: Lanzoni, Luciano

(57) **Abstract**

The present invention relates to a machine for injecting a filling into food products, comprising a plurality of injectors (10) for injecting a filling fluid, transportation means (3) designed to convey the products (2) in a feeding direction (X) through an injection station (6) where filling of the products (2) is performed. The injectors (10) are mounted fixed on the machine (1) in one or more rows arranged transversely with respect to the feeding direction (X). The transportation means (3) supply the injection station (6) with parallel rows of products (2) also arranged transversely with respect to the feeding direction (X).

Each row of products (2) is actuated by moving means (17) so as to be displaced along a travel path, by means of which each individual product (2) is raised and guided so as to pierced through a side surface (16) thereof by a needle (18) of a corresponding injector (10), and then along a return path, by means of which each product (2) is extracted from the needle (18) and at the same time injected with the filling fluid and is then re-positioned on the transportation means (3) so as to continue towards an outlet gate (9).

## Description

The present invention relates to a machine for injecting a filling into food products.

In particular, the machine in question is intended to be used in the food industry for the production of products such as brioches, small buns, croissants, etc., which are filled with custards, jam, syrups, cream, icing mixture, chocolate, etc.

In accordance with the known art, the injection machines are generally positioned downstream of a baking oven which supplies the said machines with the products to be filled, by means of a conveyor belt.

In less frequent cases, injection of the filling may be performed prior to baking of the products and therefore into pastry which is still uncooked.

At present, as is known, basically two different types of injection machines exist.

A first type of injection machine performs injection of the product in the vertical direction. For this purpose, it is provided with a plurality of injectors movable in the vertical direction and designed to be inserted at the top of the products, introducing inside them measured quantities of filling.

The main drawback of this type of machine arises from the fact that injection of the filling performed above the products does not allow satisfactory distribution thereof inside the products themselves.

Moreover, the product thus obtained, i.e. with the injection hole at the top, is not aesthetically pleasing.

The second known type of injection machine performs injection of the product in the horizontal direction. It has a plurality of aligned injectors which are movable horizontally and able to be inserted into a corresponding number of products waiting opposite the injectors. For this purpose, the products are positioned arranged in a line on a tray conveyor and are conveyed intermittently so as to be able to move and stop opposite the injectors.

In practice, some operational drawbacks have been associated with this second known type of injection machine.

Firstly, horizontal injection machines do not allow a sufficiently high productivity to be obtained since, between successive injections of a filling, it is necessary to wait for the whole line of products, already filled, to pass beyond all the injectors so as to thus leave space for the next series of products.

Secondly, this type of machine involves the movement of a plurality of injectors and hence fairly heavy masses which require fairly complex actuating mechanisms which use a not small amount of energy.

A further drawback also arises from the fact that, generally in an industrial production line, the products to be filled reach the injection machine arranged in parallel rows on a conveyor belt (following, for example, production via an extrusion machine).

This fact means that it is necessary to transfer the rows of products to be filled from the conveyor belt to the tray conveyor so that that the aligned products are arranged in a single line.

This latter operation is still nowadays usually performed manually and therefore negatively affects the productivity of the plants.

If, instead, this operation is performed by means of special needle or suction-cup loaders in synchronism with the tray conveyor, then it represents per se an additional step in the production process involving a not insignificant cost.

The main object of the present invention is therefore that of overcoming the drawbacks associated with machines of the known type by providing a machine for injecting a filling into food products, which allows the filling to be inserted through a preferential surface of the products themselves positioned in parallel rows arranged in succession on a conveyor without the need for movement of the injectors.

A further object of the present invention is that of providing an injection machine which is constructionally simple and operationally very reliable.

These and other objects as well are all achieved by the injection machine in question, which comprises a plurality of injectors connected to a plant supplying a filling fluid and mounted fixed on the machine at an injection station with one or more rows transverse with respect to the direction of feeding of the products; transportation means for conveying the products through the injection station in parallel rows also arranged transversely with respect to the direction of feeding thereof. Each row of products is actuated by moving means so as to be displaced at the injection station along a feeding path, by means of which each individual product is raised by the transportation means and guided so as to be pierced through a preferential surface thereof by a needle of a corresponding injector, and along a return path, by means of which each product is first extracted from the needle and injected with the filling fluid and is then re-positioned on the transportation means so as to continue towards an outlet gate.

The technical features of the invention, in accordance with the abovementioned objects, may be clearly determined from the contents of the claims indicated below and the advantages thereof will emerge more clearly from the detailed description which follows, provided with reference to the accompanying drawings which illustrate a purely exemplary and non-limiting embodiment, in which:
- Figure 1 shows a schematic side view of the injection machine according to the present invention;
- Figure 2 shows a schematic plan view of the machine according to Fig. 1 with some parts removed so that others are more clearly visible;
- Figure 3 shows schematically an enlarged detail of Fig. 1 relating to the movement of the products to be filled;

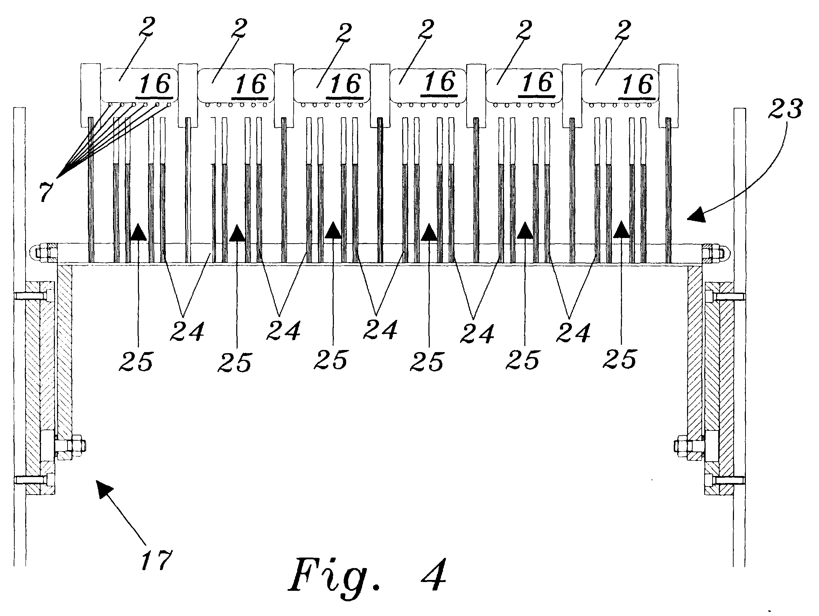

- Figure 4 shows a schematic plan view of the detail according to Fig. 1.

In accordance with the figures of the accompanying drawings, 1 denotes in its entirety the injection machine in question.

It is generally used downstream of an oven for baking food products 2 which for the sake of simplicity is not shown (except in the case where the products 2 are filled with the pastry still uncooked) and from where the products emerge being arranged on a conveyor belt in rows which are parallel and transverse with respect to the direction of their feeding movement.

This may depend for example on the fact that the products 2 are obtained by means of extrusion machines which have mixture extrusion nozzles which are aligned with one another transversely with respect to the direction of feeding of the products.

It is nevertheless still possible to associate with the conveyor belt at the exit from the baking oven (or the machine producing the products), upstream of the machine 1, re-alignment means (not shown) which are capable of arranging the products in rows which are perfectly parallel with each another.

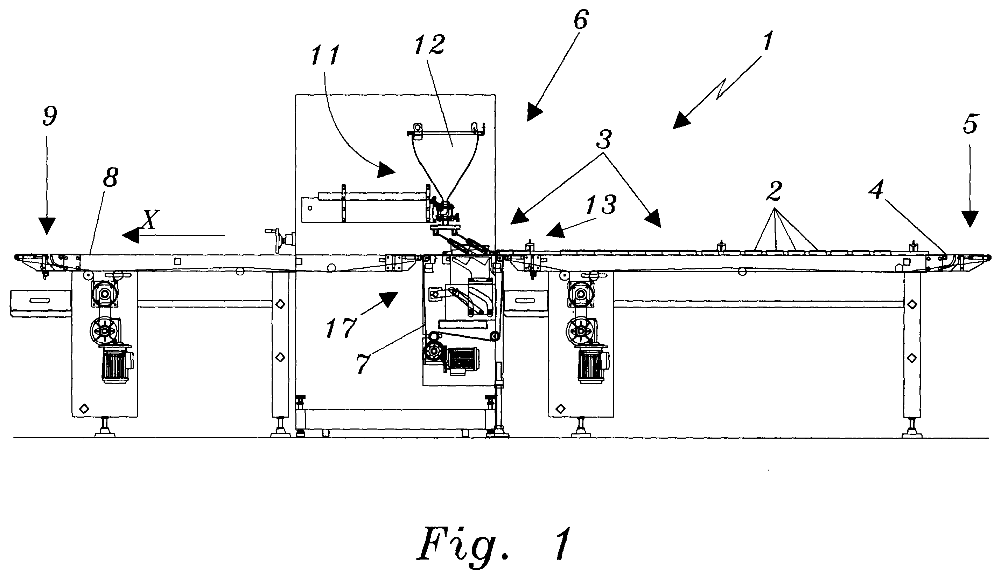

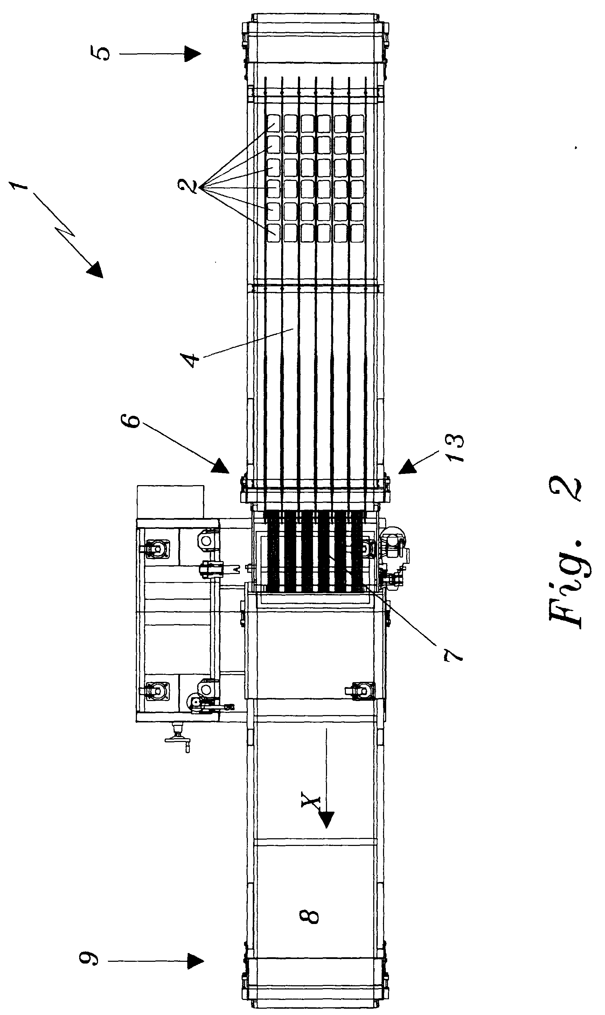

As can be seen in Figures 1 and 2, the machine in question is provided with means 3 for transportation of the products 3, consisting of a first conveyor belt 4 which is able to convey the rows of products 2 from an inlet gate 5 towards an injection station 6 in a direction X of feeding of the products 2, a plurality of bands 7 able to remove the products 2 from the first conveyor belt 4 and convey them through the injection station 6, and a second conveyor belt 8 arranged downstream of the injection station 6 and able to remove the products 2 from the bands 7 and convey them in a feeding direction X as far as an outlet gate 9.

In the injection station 6 one or more rows of injectors 10 (two rows in the example according to the accompanying figures) are mounted fixed, being arranged transversely with respect to the direction of feeding X of the products 2 and operationally suitable for introducing measured quantities of a filling fluid inside the products 2.

The injectors 10 have, operationally associated with them, a plant 11 for supplying the filling fluid, which is provided with a loading hopper 12.

The presence of each row of products 2 is signalled at the injection station 6 to a control unit of the machine 1 (for the sake of simplicity not illustrated in the accompanying figures) by means of detection means such as photocells for example (also not shown).

Advantageously, at the entrance to the injection station 6, an alignment station 13 is provided, said station being designed to arrange the products 2 in perfectly aligned rows which are parallel to one another and transverse with respect to the direction of feeding X thereof.

This alignment station 13 (see Fig. 2) is composed of two actuators 14 mounted on the machine laterally with respect to the first conveyor belt 4 and able to actuate an L-shaped piece 15 between a lowered position, where it retains and aligns the products 2 being fed on the first conveyor belt 4, and a raised position, where it does not interfere with the products 2, allowing them to pass towards the injection station 6.

The food products 2 to which reference will be made below have a preferential surface for injection of the filling fluid, which corresponds for aesthetic reasons to the side surface 16 of the product 2 located between the supporting surface and the upper surface.

In the injection station 6, each row of products 2 is transported by moving means 17 first along a feeding path and then along a return path. By means of these two paths, filling of each individual product 2 is performed.

The introduction of filling fluid is performed in an injection direction which passes through the side surface 16 of the product 2 and which generally corresponds to the direction of its greater extension.

More in detail, by means of the feeding path, the two rows of products 2 are raised by the bands 7 and guided so as to be pierced by the corresponding needles 18 of the injector 10. By means of the return path, the products 2 are first extracted from the needles 18 and injected with the filling fluid and then re-positioned on the bands 7 so as to allow them to continue towards the outlet gate 9.

The moving means 17 mentioned above comprise, in the case of the embodiment illustrated in the accompanying figures, a frame 19 which is actuated so as to be displaced in a guided manner along tracks 20 by actuating means 21.

For this purpose, first coupling means 22 which are integral with the frame 19 and engage onto the tracks 20 are provided.

The frame 19 has mounted at the top a raising rack 23 which is able to pass through the bands 7 which support the products 2 at the injection station 6.

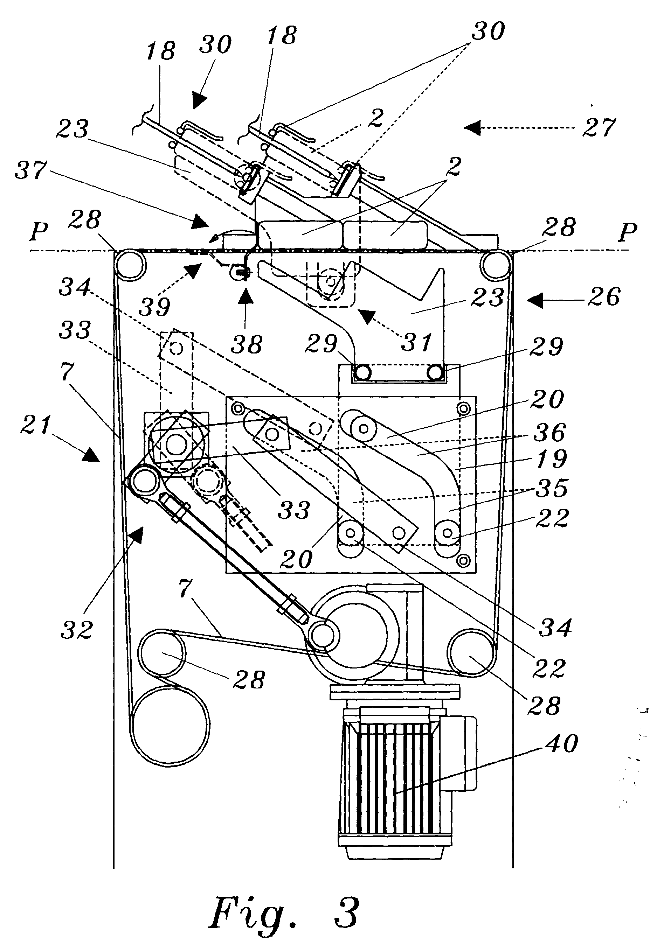

As can be seen in Fig. 3, following the movement of the frame 19, the rack 23 first raises the two rows of products 2, removing them from the bands 7 and conveying them along the feeding path, and then transports them along the return path until all the products 2 are brought back onto the bands 7.

The rack 23 consists of thin metal plates 24 which are parallel to one another and shaped so as to form seats 25 for the individual products 2.

The thin metal plates 24 are arranged, depending on the operational steps of the machine underneath or above the support plane P of the bands 7. When they are underneath the support plane P (in a position indicated by 26 in Fig. 3) they allow the products 2 to pass in the direction of feeding X thereof, while, when they are arranged above the support plane P (for example in the position indicated by 27 in Fig. 3), they support the products 2 and, as a result of operation of the moving means, allow transportation thereof from the bands 7 to the injectors 10 and vice versa.

The return path followed by the products 2 is achieved by movement along the feeding path in the opposite direction of travel.

Both the feeding path and the return path have a substantially vertical section 35 (to which a vertical section of the track 20 corresponds), where the products 2 respectively move towards the injectors 10 and move away from the injectors 10, and an inclined section 36 (to which an inclined section of the track 20 corresponds), where the products 2 are respectively pierced by the needles 18 and extracted from the needles 18.

In order to stop the products on the bands, allowing them to be removed by the rack, it is envisaged using stopping means 37 movable between an interfering position 38, where they receive, up against them, the products 2 which advance on the bands 7, and a free position 39, where they do not interfere with the products 2, allowing them to pass towards the outlet gate 9.

In order to allow rapid and easy cleaning of the various parts which make up the machine 1 and in particular those associated with the injection station 6, simple disassembly of the rack 23 from the frame 19 has been envisaged, as well as easy extraction of said rack from the body of the machine 1.

For this purpose, the bands are wound endlessly onto drive pulleys 28 (see Fig. 3) so as not to interfere with the area affected by extraction of the rack 23.

The latter is extracted transversely with respect to the direction of feeding X of the products 2 and is fixed using connection means 29 which can be easily removed from the frame 19 (for example by means of screws).

During its movement, the frame 19 is kept substantially parallel to itself so that the plane along which the seats 25 lie always has the same inclination as the needles 18 fixed on the machine 1.

Advantageously the machine 1 also comprises extraction means 30 which are designed to help the products 2 be removed from the needles 18 during the return travel of the rack 23 away from the needles 18 themselves.

As can be seen in Fig. 5, the extraction means 30 are normally mounted at the ends of the needles 18 and are actuated by the frame 19 by means of second coupling means 31 so as to be displaced along the needles 18 together with the products 2 when the latter travel along the inclined section of their feeding and return paths.

Finally it should be noted that, in a preferred embodiment, the actuating means 21 mentioned above comprise a connecting-rod/crank assembly 32 operated by a motor 40 and connected to a kinematic chain, linked to the frame 19, comprising a first and a second transmission arm 33 and 34 which are hinged together.

## Claims

1. Machine for injecting a filling into foods products substantially comprising: a plurality of injectors (10) designed to introduce inside the products (2) a measured quantity of a filling fluid at an injection station (6) of the machine (1); a plant (11) supplying said injectors (10) with said filling fluid; transportation means (3) designed to convey the products (2) in a feeding direction (X) through said injection station (6) from an inlet gate (5) to an outlet gate (9); characterized in that said injectors (10) are mounted fixed on said machine (1) along at least one row arranged transversely with respect to said feeding direction (X), and in that said transportation means (3) supply said injection station (6) with a succession of parallel rows of products (2) also arranged transversely with respect to said feeding direction (X), each said row of products (2) being actuated by moving means (17) so as to be displaced at the injection station (6) first along a feeding path, by means of which each individual product (2) of said row is raised by said transportation means (3) and guided so as to be pierced through a preferential surface (16) thereof by a needle (18) of a corresponding injector (10), and then along a return path, by means of which each said product (2) is first extracted from said needle (18) and at the same time injected with said filling fluid and then re-positioned on said transportation means (3) so as to continue towards said outlet gate.

2. Machine according to Claim 1, characterized in that comprises at least one alignment station (13) arranged upstream of said injection station (6) and designed to arrange the products (2) conveyed by said transportation means (3) in at least one row transverse with respect to said feeding direction (X).

3. Machine according to Claim 1, characterized in that said moving means (17) comprise a frame (19) actuated by actuating means (21) along at least one track (20) to which it is connected by means of first coupling means (22), said frame (19) being provided with a raising rack (23) able to pass through a plurality of bands (7) associated with said transportation means (3) and designed to support the products (2) at said injection station (6), said raising rack (23) transporting, upon actuation of said frame (19), at least one row of said products (2) first along said feeding path, removing them from said bands (7), and then along said return path, until they are re-positioned on said bands (7).

4. Machine according to Claim 3, characterized in that said actuating means (21) comprise a motorised connecting-rod/crank assembly (32) connected to a kinematic chain (33, 34) linked to said frame (19).

5. Machine according to Claims 1 and 3, characterized in that said transportation means (3) comprise: a first conveyor belt (4) arranged upstream of said injection station (6) and able to convey the products (2) from said inlet gate (5) towards said injection station (6) in said feeding direction (X); said plurality of bands (7) able to remove the products (2) from said first conveyor belt (4) and convey them through said injection station (6); a second conveyor belt (8) arranged downstream of said injection station (6) and able to remove the products (2) from said plurality of bands (7) and convey them in said feeding direction (X) as far as said outlet gate (9).

6. Machine according to Claim 3, characterized in that said raising rack (23) has at least one row of seats (25) able to receive a corresponding row of products (2).

7. Machine according to Claims 3 and 6, characterized in that said frame (19) remains substantially parallel to itself during said feeding travel and said return travel and the plane in which said row of seats (25) lies has an inclination equal to that of the needles (18) of said injectors (10).

8. Machine according to Claim 1, characterized in that said feeding path and said return path have a substantially vertical section (35), along which said products (2) by means of said moving means (17) are respectively moved towards said injectors (10) and away from said injectors (10), and an inclined section (36), along which said products (2) are respectively pierced by said needles (18) and extracted from said needles (18).

9. Machine according to Claim 3, characterized in that said raising rack (23) consists of a plurality of thin metal plates (24) which are parallel to one another and actuated so as to be displaced by said moving means (17) between a first position (26), where they are arranged underneath the plane (P) in which said bands (7) lie, allowing transportation of the products (2) on the bands (7) in the direction of feeding (X) thereof, and a second position (27), where they are arranged above the plane (P) of said bands (7) and support the products (2) along the travel path from the bands (7) to the injectors (10) and vice versa.

10. Machine according to Claim 3, characterized in that it comprises extraction means (30) which are designed to allow the products (2) to be removed from said needles (18) when during said return travel said frame (19) moves away from said injectors (10).

11. Machine according to Claim 10, characterized in that said extraction means (30) are mounted in the region of said injectors (10) and are conveyed in a manner guided by said frame (19) by means of second coupling means (31) along said needles (18) together with the products (2).

12. Machine according to Claim 1, characterized in that said raising rack (23) may be easily disconnected from said frame (19) and is mounted so as to be extractable from said machine (1), said bands (7) being for this purpose wound endlessly on drive pulleys (28) so as not to interfere with the area affected by extraction of said raising rack (23).

13. Machine according to Claim 1, characterized in that said preferential surface (16) for injection of the filling fluid consists of a side surface of the product (2) located between the supporting surface thereof and the upper surface thereof.

14. Machine according to Claims 1 and 3, characterized in that it comprises stopping means (37) movable between an interfering position (38), where they receive, up against them, the products (2) being fed on the bands (7), and a free position (39), where they do not interfere with the products (2), allowing them to pass towards the outlet gate (9).
